# EUROPÄISCHE PATENTSCHRIFT

(11) **EP 4 392 319 B1**
(45) Veröffentlichungstag und Bekanntmachung des Hinweises auf die Patenterteilung: **15.04.2026**
(21) Anmeldenummer: 22769228.2
(22) Anmeldetag: 25.08.2022
(51) Int. Cl.: B62M 6/45, B62J 45/414, B62J 43/30

(54) **VERTEILEINHEIT FÜR EIN ELEKTRISCHES FAHRRAD**
DISTRIBUTING UNIT FOR AN ELECTRIC BICYCLE
UNITÉ DE DISTRIBUTION POUR VÉLO ÉLECTRIQUE

(30) Priorität: 27.08.2021 DE 102021209424
(43) Veröffentlichungstag der Anmeldung: 03.07.2024
(73) Patentinhaber: ZF Friedrichshafen AG, 88046 Friedrichshafen (DE)
(72) Erfinder: LAUHOFF, Jakob, 72070 Tübingen (DE)
(74) Vertreter: ZF Friedrichshafen AG
(86) Internationale Anmeldenummer: PCT/EP2022/073711
(87) Internationale Veröffentlichungsnummer: WO 2023/025903

(56) Entgegenhaltungen:
- EP-A1- 3 290 317
- EP-A1- 3 372 482
- DE-A1- 102018 115 016
- DE-A1- 102019 105 724
- DE-U1- 202017 104 230
- US-A1- 2019 386 444
- US-A1- 2020 220 133

## Beschreibung

### Technisches Gebiet

Das technische Gebiet betrifft eine Verteileinheit für ein elektrisches Fahrrad, sowie ein elektrisches Fahrrad mit einer solchen Verteileinheit.

### Stand der Technik

Aus dem Stand der Technik sind elektrische Fahrräder bekannt, welche neben einer Batterie und einer Antriebseinheit, umfassend Antriebsmotor und Motorsteuergerät, weitere Verbraucher aufweisen. Die Versorgung der Verbraucher erfolgt mit elektrischer Energie der Batterie über die Antriebseinheit durch Steuerung und Versorgung mittels des Motorsteuergeräts.

US2019/386444 offenbart eine Verteileinheit für ein elektrisches Fahrrad.

### Darstellung der Erfindung

Die Erfindung betrifft eine Verteileinheit für ein elektrisches Fahrrad. Die Verteileinheit ist ausgebildet, in einem Oberrohr des Fahrrads angeordnet zu werden. Alternativ oder zusätzlich kann die Verteileinheit ausgebildet sein, in einem beliebigen Rohr eines Fahrradrahmens des Fahrrads, beispielsweise einem Sitzrohr oder einem Unterrohr, angeordnet zu werden. Die Verteileinheit kann ausgebildet sein, bei Montage des elektrischen Fahrrads im Oberrohr des Fahrrads angeordnet zu werden. Alternativ oder zusätzlich kann die Verteileinheit ausgebildet sein, nach Montage und nachträglich in einem Oberrohr des Fahrrads angeordnet zu werden. In anderen Worten kann die Verteileinheit eine nachrüstbare Einheit ausbilden.

Die Verteileinheit weist ein Steuergerät und eine Leistungsschnittstelle auf. Das Steuergerät kann dabei einen Speicher aufweisen, worauf Ausführcode gespeichert sein kann, wobei das Steuergerät eingerichtet sein kann, mittels des Ausführcodes betrieben zu werden. Durch Vorsehen von Ausführcode im Speicher des Steuergeräts kann die Verteileinheit unabhängig von anderen Einheiten des elektrischen Fahrrads betrieben werden. Die Verteileinheit kann mehr als eine Leistungsschnittstelle aufweisen.

Die Verteileinheit ist über die Leistungsschnittstelle mit einer Batterie des Fahrrads leistungsverbindbar. Beispielsweise kann die Leistungsschnittstelle einen Steckplatz in der Verteileinheit aufweisen, worin ein Stecker mit einem Kabel von der Batterie einsteckbar ist. Die Batterie kann an oder in einem Fahrradrahmen des Fahrrads untergebracht sein und die Batterie kann eingerichtet sein, eine Antriebseinheit des Fahrrads mit elektrischer Energie zu versorgen. Die Verteileinheit ist mit einem Verbraucher über die Leistungsschnittstelle leistungsverbindbar. Alternativ oder zusätzlich kann die Verteileinheit mit einem Verbraucher über eine weitere Leistungsschnittstelle der Verteileinheit leistungsverbindbar sein. Die Verteileinheit kann mit mehr als einem Verbraucher leistungsverbindbar sein. Der Verbraucher kann zumindest eines von Frontlicht, Rücklicht, Gangschaltung und akustischem Signalgeber sein. Der akustische Signalgeber kann eine Klingel, beispielsweise eine elektrische Klingel, eine Hupe oder ein Signalhorn sein. Die Leistungsverbindung kann eine galvanische Verbindung darstellen. In anderen Worten kann eine galvanische Verbindung von der Batterie über die Verteileinheit zum Verbraucher bestehen.

Das Steuergerät ist eingerichtet, um die Versorgung des Verbrauchers mit elektrischer Energie von der Batterie über die Verteileinheit gemäß einem Steuersignal zu steuern. Das Steuergerät kann eingerichtet sein, das Steuersignal zu bestimmen. Das Steuergerät kann eingerichtet sein, dem Verbraucher elektrische Energie von der Batterie gemäß dem Steuersignal bereitzustellen, wobei die Verteileinheit hierfür beispielsweise einen durch das Steuersignal steuerbaren Transformator aufweisen kann. Alternativ oder zusätzlich kann das Steuergerät eingerichtet sein, das Steuersignal an den Verbraucher zu senden. Der Verbraucher kann dabei eingerichtet sein, selbstständig elektrische Energie von der Batterie über die Verteileinheit gemäß dem Steuersignal anzufordern. Das Steuern der Versorgung des Verbrauchers kann ein Anschalten oder Abschalten des Verbrauchers, sowie ein Drosseln oder Erhöhen der Energieversorgung des Verbrauchers aufweisen.

Vorteilhafterweise wird somit eine Verteileinheit für ein elektrisches Fahrrad bereitgestellt, bei der ein oder mehrere Verbraucher zentral über die Verteileinheit mit elektrischer Energie von der Batterie versorgt werden können. Eine einzelne galvanische Verbindung, auch Leistungsverbindung, zwischen der Batterie und der Verteileinheit kann somit genügen, mehrere Verbraucher mit der Batterie zu verbinden und mit elektrischer Energie von der Batterie zu versorgen. Durch die Anordnung der Verteileinheit im Oberrohr kann die Verteileinheit leicht zugänglich sein, insbesondere bei Wartung oder Reparatur. So kann ein Austauschen einer Leistungsverbindung zwischen einer Verteileinheit und einem Verbraucher erfolgen, ohne die Leistungsverbindung zwischen der Verteileinheit und der Batterie erreichen zu müssen. Dies kann insbesondere dann vorteilhaft sein, wenn die Verbindung zwischen Verteileinheit und Batterie im Inneren des Fahrradrahmens angeordnet und damit schwer zugänglich ist. Ferner kann dadurch auf mehrere Leitungen zwischen Verbrauchern und der Batterie verzichtet werden, wodurch Platz im Fahrradrahmen gespart wird. Dieser Platz kann beispielsweise für das Anordnen der Batterie verwendet werden.

Gemäß einer weiteren Ausführungsform kann das Steuergerät eingerichtet sein, Beschleunigungsdaten einzulesen. Die Beschleunigungsdaten können Beschleunigungsdaten des Fahrrads umfassen, insbesondere Beschleunigungsdaten der Verteileinheit. Die Beschleunigungsdaten können mit einem Beschleunigungssensor erfasst werden. Der Beschleunigungssensor kann in der Verteileinheit angeordnet sein. Alternativ oder zusätzlich kann der oder ein weiterer Beschleunigungssensor am Fahrrad und außerhalb der Verteileinheit angeordnet sein, beispielsweise an einem Federelement, wie einer Federgabel oder einer Hinterradfeder, am Lenker oder an der Antriebseinheit. Die Beschleunigungsdaten können Information zu einer Linearbeschleunigung und alternativ oder zusätzlich zu einer Rotationsbeschleunigung der Verteileinheit oder des Fahrrads umfassen. Das Steuergerät kann eingerichtet sein, einen Verbraucher in Abhängigkeit der Beschleunigungsdaten gemäß einem Steuersignal zu steuern. Dazu kann das Steuergerät eingerichtet sein, das Steuersignal in Abhängigkeit der Beschleunigungsdaten zu bestimmen. Beispielsweise kann das Steuergerät eingerichtet sein, ein Rücklicht als Verbraucher in Abhängigkeit der Beschleunigungsdaten zu steuern. So kann bei einer starken Verzögerungsbeschleunigung durch Bremsen eines Benutzers des Fahrrads das Rücklicht durch das Steuergerät aufgrund der erfassten Beschleunigungsdaten so gesteuert werden, so dass das Rücklicht rot blinkt oder aufleuchtet. Ferner kann das Steuergerät eingerichtet sein, ein ungewolltes Beschleunigen des Fahrrads zu erkennen, beispielsweise bei einem Diebstahlversuch oder bei einem Sturz.

Das Steuergerät kann dann eingerichtet sein, in Reaktion darauf einen Verbraucher anzusteuern. So können bei einem Diebstahlversuch alle Lichter und akustischen Signalgeber angeschaltet werden, und bei einem Sturz kann das Steuergerät eingerichtet sein, über eine Funkschnittstelle ein Notrufsignal abzugeben. Ferner können die Beschleunigungsdaten Information zur Topografie des Umfelds aufweisen und damit Information zu einer Steigung des Umfelds aufweisen. Das Steuergerät kann eingerichtet sein, die Antriebseinheit als Verbraucher in Abhängigkeit der Steigung anzusteuern. So kann etwa eine Unterstützungsleistung, aufgebracht durch die Antriebseinheit, bei einer größeren Steigung durch das Steuergerät erhöht werden. Vorteilhafterweise kann somit die Verteileinheit eingerichtet sein, auf Änderung der relativen Bewegung zu einem Umfeld zu reagieren und einen Verbraucher in Abhängigkeit davon zu steuern.

Gemäß einer weiteren Ausführungsform kann die Verteileinheit eine Ladeschnittstelle für ein mobiles Endgerät aufweisen. Die Ladeschnittstelle kann eine Steckverbindung aufweisen. Alternativ oder zusätzlich kann die Ladeschnittstelle eine induktive Verbindungsschnittstelle aufweisen. Erfindungsgemäß ist das mobile Endgerät über eine kraftschlüssige Verbindung mit der Ladeschnittstelle kraftschlüssig und lösbar verbindbar. Erfindungsgemäß erfolgt dies über Magneten in der Ladeschnittstelle.

Das mobile Endgerät kann für die kraftschlüssige Verbindung auch lediglich ein magnetisierbares Material, wie Eisen, aufweisen. Dies kann dann vom korrespondierenden Teil mittels Magnet angezogen werden. Das mobile Endgerät kann beispielsweise ein Smartphone des Benutzers sein. Die Verteileinheit kann eingerichtet sein, das mobile Endgerät über die Ladeschnittstelle mit elektrischer Energie von der Batterie zu laden. Die Verteileinheit kann alternativ oder zusätzlich eingerichtet sein, die Batterie über die Ladeschnittstelle mit elektrischer Energie von dem mobilen Endgerät zu laden. Vorteilhafterweise kann somit ein Verteilen von elektrischer Energie mittels der Verteileinheit auch zwischen dem mobilen Endgerät des Benutzers und dem Fahrrad erfolgen.

Gemäß einer weiteren Ausführungsform kann die Verteileinheit eine Datenschnittstelle für ein mobiles Endgerät aufweisen. Die Datenschnittstelle kann zusammen mit der Ladeschnittstelle als eine Schnittstelle, beispielsweise als USB-Buchse, ausgebildet sein.

Die Datenschnittstelle kann alternativ oder zusätzlich eine Funkschnittstelle aufweisen. Die Verteileinheit kann eingerichtet sein, Daten über die Datenschnittstelle von dem mobilen Endgerät zu empfangen. Alternativ oder zusätzlich kann die Verteileinheit eingerichtet sein, Daten über die Datenschnittstelle an das mobile Endgerät zu senden. Das Steuergerät kann eingerichtet sein, die von dem mobilen Endgerät empfangenen Daten einzulesen. Empfangene Daten von dem mobilen Endgerät können beispielsweise Benutzerwünsche des Benutzers umfassen. Diese können beispielsweise über eine Applikation des mobilen Endgeräts vom Benutzer eingegeben werden. Das Steuergerät kann eingerichtet sein, einen Verbraucher in Abhängigkeit von den eingelesenen Daten gemäß einem Steuersignal zu steuern.

Beispielsweise kann das Steuergerät eingerichtet sein, über die Datenschnittstelle einen Ladezustand der Batterie des Fahrrads an das mobile Endgerät zu senden. Das mobile Endgerät kann dem Benutzer den Ladezustand auf einem Display des mobilen Endgeräts darstellen. Der Benutzer kann in Reaktion darauf eine Priorität von zu versorgenden Verbrauchern angeben. Diese Information kann über die Datenschnittstelle von der Verteileinheit empfangen werden und vom Steuergerät eingelesen werden. Sodann kann das Steuergerät eingerichtet sein, ein Steuersignal so zu bestimmten, dass beispielsweise primär das Frontlicht mit elektrischer Energie versorgt wird und weitere Verbraucher aufgrund des geringen Ladezustands der Batterie und der Benutzereingabe nicht mit Energie versorgt werden. Aufgrund einer solchen benutzerdefinierten Priorisierung von zu versorgenden Verbrauchern kann das Fahrerlebnis des Benutzers direkt beeinflusst und verbessert werden. Ferner kann das Steuergerät eingerichtet sein, bei einem mittels erfasster Beschleunigungsdaten erkanntem Sturz ein Signal an das mobile Endgerät zu senden, sodass das mobile Endgerät als Funkschnittstelle zum Abgeben eines Notrufs verwendet werden kann. Ferner kann das Steuergerät eingerichtet sein, über eine solche Funkschnittstelle, ausbildbar durch das mobile Endgerät, Daten in eine Cloud zu übertragen. Beispielsweise kann dies zeitgetriggert oder ereignisgetriggert, etwa in einem Fehlerfall, erfolgen. An die Cloud übertragene Daten können als Flottendaten zur Datenanalyse von systematischen Fehlern von Verteileinheiten oder Fahrrädern verwendet werden. Ferner kann das Steuergerät eingerichtet sein, über die Datenschnittstelle Softwareupdates zu erhalten. Das Steuergerät kann dabei eingerichtet sein, Verbraucher in Abhängigkeit des Softwareupdates anzusteuern. So kann nach dem Softwareupdate ein Ansteuern eines Verbrauchers, etwa der Antriebseinheit, mittels der Verteileinheit anders erfolgen als vor dem Softwareupdate.

Gemäß einer weiteren Ausführungsform kann die Verteileinheit eine Benutzerschnittstelle aufweisen. Die Benutzerschnittstelle kann Eingabemittel und alternativ oder zusätzlich Ausgabemittel aufweisen. Beispielsweise kann die Benutzerschnittstelle ein Touchdisplay, einen Lautsprecher, Tasten und alternativ oder zusätzlich Knöpfe aufweisen. Eine Verteileinheit mit einer solchen Benutzerschnittstelle kann ein Core-HMI, Core Human Machine Interface, darstellen. Die Benutzerschnittstelle kann eingerichtet sein, eine Benutzereingabe zu erfassen. Beispielsweise kann die zuvor diskutierte Priorisierung durch den Benutzer mittels Benutzereingabe über die Benutzerschnittstelle direkt an der Verteileinheit erfolgen. Das Steuergerät kann eingerichtet sein, die erfasste Benutzereingabe einzulesen und einen Verbraucher in Abhängigkeit der Benutzereingabe gemäß einem Steuersignal zu steuern. Beispielsweise kann der Benutzer über die Benutzerschnittstelle das Frontlicht und das Rücklicht als Verbraucher an- und ausschalten. Über die Benutzerschnittstelle kann die Versorgung aller Verbraucher und die Versorgung der Antriebseinheit mit elektrischer Energie der Batterie an- und ausgeschaltet werden. Ferner kann über die Benutzerschnittstelle die Unterstützungsleistung, auch genannt Unterstützungsgrad, durch den Benutzer eingestellt werden. Weiter kann mittels Eingabemitteln, wie Tasten, durch Betätigen einer Tastenkombination durch den Benutzer ein Bluetooth Pairing mit einem mobilen Endgerät hergestellt werden. Eine Datenverbindung zwischen Verteileinheit und mobilem Endgerät kann so beispielsweise hergestellt werden. Ferner kann die Benutzerschnittstelle als Ausgabemittel beispielsweise akustische und alternativ oder zusätzlich visuelle Ausgabemittel aufweisen. Akustische Ausgabemittel können einen Lautsprecher oder ein Horn aufweisen. Visuelle Ausgabemittel können ein Display, wie das Touchdisplay, und alternativ oder zusätzlich LEDs aufweisen. Das Steuergerät kann eingerichtet sein, über die Ausgabemittel dem Benutzer den Ladezustand der Batterie, Fehlercodes von Verbrauchern und alternativ oder zusätzlich Fehlercodes der Verteileinheit zu kommunizieren.

Gemäß einer weiteren Ausführungsform kann die Verteileinheit eine Datenschnittstelle aufweisen, welche zur Kommunikation mit einer weiteren Komponente des elektrischen Fahrrads eingerichtet sein kann. Die Datenschnittstelle kann zusammen mit der Leistungsschnittstelle der Verteileinheit ausgebildet sein. Die Verteileinheit kann mehr als eine Datenschnittstelle zur Kommunikation mit mehr als einer Komponente aufweisen. Die weitere Komponente kann beispielsweise die Antriebseinheit, die Batterie oder ein oder mehrere Verbraucher sein. Das Steuergerät kann eingerichtet sein, Daten von der weiteren Komponente des elektrischen Fahrrads über die Datenschnittstelle einzulesen. Das Steuergerät kann diese Daten aktiv von der weiteren Komponente abfragen. Alternativ oder zusätzlich kann die Komponente die Daten aktiv an das Steuergerät senden, beispielsweise zeit- oder ereignisgetriggert. Insbesondere kann bei Vorliegen von neuen Datenwerten in der Komponente das Senden der Daten an das Steuergerät von der Komponente getriggert werden. Das Steuergerät kann eingerichtet sein, einen Verbraucher in Abhängigkeit der Daten gemäß einem Steuersignal zu steuern. Beispielsweise kann ein Ladezustandssensor Information zum Ladezustand der Batterie an die Verteileinheit senden. Das Steuergerät kann sodann eingerichtet sein, aufgrund der empfangenen Daten bezüglich des Ladezustands der Batterie ein Steuersignal zu bestimmen und damit Verbraucher so anzusteuern, dass die Versorgung aller zu versorgenden Verbraucher über die Verteileinheit mit dem aktuellen Ladezustand der Batterie ermöglicht wird.

Ein weiterer Aspekt der Erfindung betrifft ein Fahrrad mit einer Verteileinheit gemäß einer Ausführungsform des vorherigen Aspekts der Erfindung. Das Fahrrad kann beispielsweise ein Pedelec, ein elektrisches Mountainbike oder ein elektrisches Lastenfahrrad sein.

Gemäß einer weiteren Ausführungsform kann das Fahrrad einen Fahrradrahmen mit einem Oberrohr, einer Batterie, einer Antriebseinheit und einem Verbraucher aufweisen. Der Fahrradrahmen kann neben dem Oberrohr ein Sitzrohr und ein Unterrohr aufweisen. Die Batterie kann im Fahrradrahmen angeordnet sein, insbesondere kann die Batterie im Sitzrohr und alternativ oder zusätzlich im Unterrohr des Fahrradrahmens angeordnet sein. Die Antriebseinheit kann an einem Übergang zwischen Sitzrohr und Unterrohr angeordnet sein. Das Fahrrad kann mehr als einen Verbraucher aufweisen. Beispielsweise kann das Fahrrad als Verbraucher Frontlicht, Rücklicht, Klingel und Gangschaltung aufweisen. Die Verteileinheit kann in dem Oberrohr angeordnet sein. Insbesondere kann die Verteileinheit in Fahrtrichtung vorne am Oberrohr und nahe an der Verbindungsstelle zwischen Oberrohr und Unterrohr angeordnet sein. Die Verteileinheit kann so in dem Oberrohr angeordnet sein, dass eine Benutzerschnittstelle der Verteileinheit nach oben und zum auf dem Fahrrad sitzenden Benutzer zeigt.

Der Verbraucher kann über die Verteileinheit indirekt mit der Batterie verbunden sein. In anderen Worten kann der Verbraucher direkt mit der Verteileinheit und die Verteileinheit direkt mit der Batterie verbunden sein. Die Antriebseinheit kann direkt mit der Batterie verbunden sein. Beginnend vom tiefsten Punkt des Rahmens kann die Antriebseinheit an einem Übergang vom Sitzrohr zum Unterrohr angeordnet sein. Damit direkt verbunden und weiter oben im Unterrohr angeordnet kann die Batterie angeordnet sein. Damit direkt verbunden und weiter oben im Fahrradrahmen, genauer im Oberrohr, kann die Verteileinheit angeordnet sein. Mit der Verteileinheit direkt verbunden und beispielsweise am Lenker angeordnet kann das Frontlicht als Verbraucher angeordnet sein.

Gemäß einer weiteren Ausführungsform kann ein erstes Kabel von dem Verbraucher zur Verteileinheit führen. Alternativ können mehrere erste Kabel von mehreren Verbrauchern zur Verteileinheit führen. So kann ein erstes Kabel von dem akustischen Signalgeber, wie der elektrischen Klingel der Hupe oder dem Horn, zur Verteileinheit führen und ein weiteres erstes Kabel kann vom Frontlicht zur Verteileinheit führen. Diese ersten Kabel von den Verbrauchern zur Verteileinheit können, insbesondere wenn die Verbraucher am Lenker angeordnet sind, vergleichsweise kurz ausgebildet sein und für Wartungs- und Reparaturzwecke leicht zugänglich sein.

Ein zweites Kabel kann von der Verteileinheit zur Batterie führen. Insbesondere kann das zweite Kabel im Querschnitt dicker als jedes erste Kabel sein, um die gesamte elektrische Energie, welche für die mit der Verteileinheit verbundenen Verbraucher vorgesehen ist, durch ein zweites Kabel transportieren zu können. Das zweite Kabel kann vollständig innerhalb des Fahrradrahmens und verbaut im Fahrradrahmen führen. Ein drittes Kabel kann von der Batterie zur Antriebseinheit führen. Das dritte Kabel kann vollständig innerhalb des Fahrradrahmens, insbesondere vollständig im unteren Teil des Unterrohrs angeordnet und verbaut sein. Das erste, das zweite und das dritte Kabel können Leistungs- und Datenleitungskabel zugleich sein.

Vorteilhafterweise kann somit ein Fahrrad gezeigt sein, bei dem ein Austausch oder ein Hinzufügen von Verbrauchern besonders leicht erfolgen kann, da ein erstes Kabel leicht ausgetauscht oder hinzugefügt werden kann und gerade kein direkt führendes Kabel von Verbraucher zur Antriebseinheit ausgetauscht oder hinzugefügt werden muss.

Gemäß einer weiteren Ausführungsform weist die Antriebseinheit einen Antriebsmotor und ein Motorsteuergerät auf. Das Motorsteuergerät kann eingerichtet sein, den Antriebsmotor zu steuern. Insbesondere kann das Motorsteuergerät eingerichtet sein, lediglich den Antriebsmotor zu steuern. Insbesondere kann das dritte Kabel lediglich ein Leistungskabel und kein Datenkabel sein, wodurch ein Steuern von Verbrauchern mittels des Motorsteuergeräts gerade nicht ermöglicht wird.

Vorteilhafterweise kann somit ein Fahrrad gezeigt sein, wobei Verbraucher unabhängig vom Motorsteuergerät durch die Verteileinheit gesteuert werden können.

### Kurze Beschreibung der Figuren

- Figur 1a: zeigt eine Verteileinheit nach einer Ausführungsform in perspektivischer Ansicht von oben.
- Figur 1b: zeigt eine Verteileinheit nach einer Ausführungsform in perspektivischer Ansicht von unten.
- Figur 2: zeigt schematisch eine Verteileinheit samt weiterer, daran angeschlossener Komponenten nach einer Ausführungsform.
- Figur 3: zeigt ein elektrisches Fahrrad mit einer Verteileinheit im Oberrohr nach einer Ausführungsform.

### Detaillierte Beschreibung von Ausführungsformen

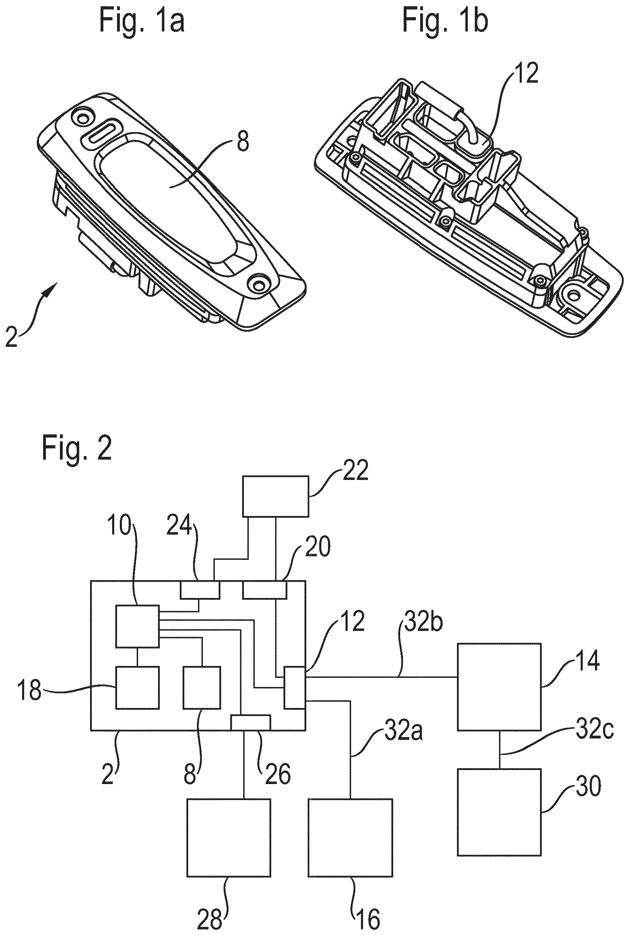

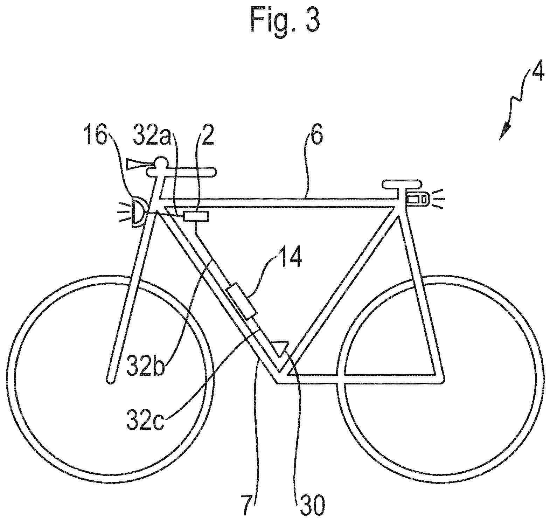

Figuren 1a und 1b zeigen eine Verteileinheit 2 gemäß einer Ausführungsform in perspektivischer Ansicht. Die Verteileinheit 2 ist eingerichtet, in einem Oberrohr 6 eines elektrischen Fahrrads 4, gezeigt in Figur 3, angeordnet zu werden. Das elektrische Fahrrad 4 weist einen das Oberrohr 6 aufweisenden Fahrradrahmen 7 auf. Das elektrische Fahrrad 4 weist eine Antriebseinheit 30 auf, welche an einem Übergang von einem Sitzrohr zu einem Unterrohr des Fahrradrahmens 7 angeordnet ist. Das elektrische Fahrrad 4 weist eine Batterie 14 auf, welche in dem Unterrohr des Fahrradrahmens 7 angeordnet ist. Die Batterie 14 und die Antriebseinheit 30 sind über ein drittes Kabel 32c verbunden. Über ein zweites Kabel 32b sind die Batterie 14 und die Verteileinheit 2 verbunden. Das zweite und das dritte Kabel 32b, 32c sind im Unterrohr des Fahrradrahmens 7 verbaut und schwer zugänglich. Die Verteileinheit 2 ist nahe an einem Übergang vom Unterrohr zum Oberrohr 6 des Fahrradrahmens 7 angeordnet. Das elektrische Fahrrad 4 weist ein Frontlicht als Verbraucher 16 auf. Der Verbraucher 16 ist über ein erstes Kabel 32a direkt mit der Verteileinheit 2 verbunden. Das erste Kabel 32a ist leicht zugänglich, beispielsweise genügt ein Ausbau der Verteileinheit 2, um das erste Kabel 32a von der Verteileinheit 2 zu lösen und vom Fahrrad 4 zu entfernen.

Die Verteileinheit 2 weist eine Benutzerschnittstelle 8 auf, welche in Figur 1a gezeigt ist. Die Benutzerschnittstelle 8 ist ein Touchdisplay und das Touchdisplay ist am Oberrohr 6 so angeordnet, dass ein auf dem Fahrrad 4 sitzender Benutzer auf die Benutzerschnittstelle 8 direkt zugreifen kann. Exemplarisch gezeigt ist in Figur 1b eine Leistungsschnittstelle 12 der Verteileinheit 2. Über die Leistungsschnittstelle 12 ist die Verteileinheit 2, wie in Figur 2 gezeigt, mit der Batterie 14 und dem Verbraucher 16 direkt verbunden. Die Verteileinheit 2 weist ein Steuergerät 10 auf, wie in Figur 2 schematisch dargestellt. Das Steuergerät 10 ist eingerichtet, die Versorgung des Verbrauchers 16 mit elektrischer Energie von der Batterie 14 zu steuern. Dazu ist das Steuergerät 10 eingerichtet, ein Steuersignal zu bestimmen und mit dem Steuersignal die Versorgung zu steuern.

Die Verteileinheit 2 weist ferner einen Beschleunigungssensor 18 auf. Der Beschleunigungssensor 18 und das Steuergerät 10 sind verbunden, so dass das Steuergerät 10 Daten, erfasst mit dem Beschleunigungssensor 18, einlesen kann. Das Steuergerät 10 ist dabei eingerichtet, in Abhängigkeit der Beschleunigungsdaten ein Steuersignal zum Steuern des Verbrauchers 16 zu bestimmen.

Die Verteileinheit 2 weist ferner eine Ladeschnittstelle 20 auf. Die Ladeschnittstelle 20 ist als induktive Ladeschnittstelle ausgebildet und eingerichtet, ein mobiles Endgerät 22 mit elektrischer Energie von der Batterie 14 zu laden. Die Ladeschnittstelle 20 ist dabei so in der Verteileinheit 2 angeordnet, dass ein nahe an der Benutzerschnittstelle 8, gezeigt in Figur 1a, angeordnetes mobiles Endgerät 22 aufgeladen werden kann. Dazu ist die Verteileinheit 2 und insbesondere das Steuergerät 10 eingerichtet, das Laden des mobilen Endgeräts 22 zu steuern.

Ferner weist die Verteileinheit 2 eine Datenschnittstelle 24 auf. Die Datenschnittstelle 24 ist als Funkschnittstelle ausgebildet und eingerichtet, mit dem mobilen Endgerät 22 Datenkommunikation zu betreiben. Das Steuergerät 10 ist eingerichtet, Daten von dem mobilen Endgerät 22 über die Datenschnittstelle 24 zu erfassen und einzulesen und den Verbraucher 16 in Abhängigkeit dieser Daten gemäß einem zu bestimmenden Steuersignal zu steuern. So ist es für einen Benutzer möglich, einen Benutzerwunsch über das mobile Endgerät einzugeben, so dass beispielsweise das Frontlicht als Verbraucher 16 an- oder ausgeschaltet wird.

Alternativ oder zusätzlich erfolgt die Benutzereingabe zum An- oder Ausschalten des Frontlichts als Verbraucher 16 über die Benutzerschnittstelle 8. Das Steuergerät 10 ist dabei eingerichtet, in Abhängigkeit der Benutzereingabe über die Benutzerschnittstelle 8 das Steuersignal zum Steuern des Verbrauchers 16 zu bestimmen.

Ferner weist die Verteileinheit 2 eine Datenschnittstelle 26 auf. Eine weitere Komponente 28 des elektrischen Fahrrads 4 umfasst beispielsweise einen Ladezustandssensor zum Bestimmen des Ladezustands der Batterie 14. Das Steuergerät 10 ist eingerichtet, das Frontlicht als Verbraucher 16 in Abhängigkeit der von der Komponente 28 als Ladezustandssensor erfassten Daten bezüglich des Ladezustands der Batterie 14 zu steuern. So ist das Steuergerät 10 eingerichtet, das Frontlicht als Verbraucher 16 zu dimmen und damit den elektrischen Energieverbrauch des Verbrauchers 16 einzuschränken, wenn der Ladezustand der Batterie 14 niedrig ist.

Sowohl aus Figur 2 als auch aus Figur 3 ist ersichtlich, dass eine durchgängige galvanische Verbindung von Antriebseinheit 30 über Batterie 14 und ferner über die Verteileinheit 2 zum Verbraucher 16 gegeben ist. Eine direkte galvanische Verbindung, beispielsweise über ein separates Kabel von Verbraucher 16 zur Antriebseinheit 30, ist somit nicht nötig. Ein Austauschen oder Warten von dem ersten Kabel 32a und dem Verbraucher 16 wird somit erleichtert, da die Zugänglichkeit von Verbraucher 16 und erstem Kabel 32a besser ist als die Zugänglichkeit von den Kabeln 32b, 32c.

### Bezugszeichen

- 2: Verteileinheit
- 4: elektrisches Fahrrad
- 6: Oberrohr
- 7: Fahrradrahmen
- 8: Benutzerschnittstelle
- 10: Steuergerät
- 12: Leistungsschnittstelle
- 14: Batterie
- 16: Verbraucher
- 18: Beschleunigungssensor
- 20: Ladeschnittstelle
- 22: mobiles Endgerät
- 24: Datenschnittstelle
- 26: Datenschnittstelle
- 28: weitere Komponente des elektrischen Fahrrads
- 30: Antriebseinheit
- 32a: erstes Kabel
- 32b: zweites Kabel
- 32c: drittes Kabel

## Patentansprüche

1. Verteileinheit (2) für ein elektrisches Fahrrad (4), wobei die Verteileinheit (2) ausgebildet ist, in einem Oberrohr (6) des Fahrrads (4) angeordnet zu werden, wobei die Verteileinheit (2) ein Steuergerät (10) und eine Leistungsschnittstelle (12) aufweist, wobei die Verteileinheit (2) über die Leistungsschnittstelle (12) mit einer Batterie (14) des Fahrrads (4) leistungsverbindbar ist, wobei die Verteileinheit (2) mit einem Verbraucher (16) über die Leistungsschnittstelle (12) leistungsverbindbar ist, und wobei das Steuergerät (10) eingerichtet ist, die Versorgung des Verbrauchers (16) mit elektrischer Energie von der Batterie (14) über die Verteileinheit (2) gemäß einem Steuersignal zu steuern,
wobei die Verteileinheit (2) eine Ladeschnittstelle (20) für ein mobiles Endgerät (22) aufweist, und die Verteileinheit (2) eingerichtet ist, das mobile Endgerät (22) über die Ladeschnittstelle (20) mit elektrischer Energie von der Batterie (14) zu laden, wobei die Ladeschnittstelle (20) einen Magnet für eine kraftschlüssige Verbindung mit dem mobilen Endgerät (22) aufweist.

2. Verteileinheit (2) nach Anspruch 1, wobei das Steuergerät (10) eingerichtet ist, Beschleunigungsdaten, erfasst mit einem Beschleunigungssensor (18), einzulesen, und wobei das Steuergerät (10) eingerichtet ist, einen Verbraucher (16) in Abhängigkeit der Beschleunigungsdaten gemäß einem Steuersignal zu steuern.

3. Verteileinheit (2) nach einem der vorhergehenden Ansprüche, wobei die Verteileinheit (2) eine Datenschnittstelle (24) für ein mobiles Endgerät (22) aufweist, und wobei die Verteileinheit (2) eingerichtet ist, Daten über die Datenschnittstelle (24) von dem mobilen Endgerät (22) zu empfangen, und wobei das Steuergerät (10) eingerichtet ist, die von dem mobilen Endgerät (22) empfangenen Daten einzulesen und einen Verbraucher (16) in Abhängigkeit von den eingelesenen Daten gemäß einem Steuersignal zu steuern.

4. Verteileinheit (2) nach einem der vorhergehenden Ansprüche, wobei die Verteileinheit (2) eine Benutzerschnittstelle (8) aufweist, und wobei die Benutzerschnittstelle (8) eingerichtet ist, eine Benutzereingabe zu erfassen und das Steuergerät (10) eingerichtet ist, die erfasste Benutzereingabe einzulesen und einen Verbraucher (16) in Abhängigkeit der Benutzereingabe gemäß einem Steuersignal zu steuern.

5. Verteileinheit (2) nach einem der vorhergehenden Ansprüche, wobei die Verteileinheit (2) eine Datenschnittstelle (26) aufweist, welche zur Kommunikation mit einer weiteren Komponente (28) des elektrischen Fahrrads (4) eingerichtet ist, und wobei das Steuergerät (10) eingerichtet ist, Daten von der weiteren Komponente (28) des elektrischen Fahrrads (4) über die Datenschnittstelle (26) einzulesen, und wobei das Steuergerät (10) eingerichtet ist, einen Verbraucher (16) in Abhängigkeit der Daten gemäß einem Steuersignal zu steuern.

6. Fahrrad (4) mit einer Verteileinheit (2) nach einem Ansprüche 1 bis 5.

7. Fahrrad (4) nach Anspruch 6, welches einen Fahrradrahmen (7) mit einem Oberrohr (6), eine Batterie (14), eine Antriebseinheit (30) und einen Verbraucher (16) aufweist, wobei die Verteileinheit (2) in dem Oberrohr (6) angeordnet ist, wobei die Batterie (14) in dem Fahrradrahmen (7) angeordnet ist, und wobei der Verbraucher (16) über die Verteileinheit (2) indirekt mit der Batterie (14) verbunden ist und die Antriebseinheit (30) direkt mit der Batterie (14) verbunden ist.

8. Fahrrad (4) nach Anspruch 7, wobei ein erstes Kabel (32a) von dem Verbraucher (16) zur Verteileinheit (2) führt, und wobei ein zweites Kabel (32b) von der Verteileinheit zur Batterie (14) führt, und wobei ein drittes Kabel (32c) von der Batterie (14) zur Antriebseinheit (30) führt.

9. Fahrrad (4) nach einem der Ansprüche 7 oder 8, wobei die Antriebseinheit (30) einen Antriebsmotor und ein Motorsteuergerät aufweist, und wobei das Motorsteuergerät eingerichtet ist, den Antriebsmotor (28) zu steuern.

## Claims

1. Distribution unit (2) for an electric bicycle (4), wherein the distribution unit (2) is designed to be arranged in a top tube (6) of the bicycle (4), wherein the distribution unit (2) has a control device (10) and a power interface (12), wherein the distribution unit (2) is able to be connected in terms of power to a battery (14) of the bicycle (4) via the power interface (12), wherein the distribution unit (2) is able to be connected in terms of power to a load (16) via the power interface (12), and wherein the control device (10) is configured to control the supply of electrical energy from the battery (14) to the load (16) via the distribution unit (2) according to a control signal,
wherein the distribution unit (2) has a charging interface (20) for a mobile terminal (22), and the distribution unit (2) is configured to charge the mobile terminal (22) with electrical energy from the battery (14) via the charging interface (20), wherein the charging interface (20) has a magnet for a force-fitting connection to the mobile terminal (22).

2. Distribution unit (2) according to Claim 1, wherein the control device (10) is configured to read in acceleration data captured using an acceleration sensor (18), and wherein the control device (10) is configured to control a load (16) according to a control signal depending on the acceleration data.

3. Distribution unit (2) according to either of the preceding claims, wherein the distribution unit (2) has a data interface (24) for a mobile terminal (22), and wherein the distribution unit (2) is configured to receive data from the mobile terminal (22) via the data interface (24), and wherein the control device (10) is configured to read in the data received from the mobile terminal (22) and to control a load (16) according to a control signal depending on the read-in data.

4. Distribution unit (2) according to one of the preceding claims, wherein the distribution unit (2) has a user interface (8), and wherein the user interface (8) is configured to detect a user input and the control device (10) is configured to read in the detected user input and to control a load (16) according to a control signal depending on the user input.

5. Distribution unit (2) according to one of the preceding claims, wherein the distribution unit (2) has a data interface (26) that is configured to communicate with a further component (28) of the electric bicycle (4), and wherein the control device (10) is configured to read in data from the further component (28) of the electric bicycle (4) via the data interface (26), and wherein the control device (10) is configured to control a load (16) according to a control signal depending on the data.

6. Bicycle (4) having a distribution unit (2) according to one of Claims 1 to 5.

7. Bicycle (4) according to Claim 6, which has a bicycle frame (7) with a top tube (6), a battery (14), a drive unit (30) and a load (16), wherein the distribution unit (2) is arranged in the top tube (6), wherein the battery (14) is arranged in the bicycle frame (7), and wherein the load (16) is indirectly connected to the battery (14) via the distribution unit (2) and the drive unit (30) is directly connected to the battery (14).

8. Bicycle (4) according to Claim 7, wherein a first cable (32a) leads from the load (16) to the distribution unit (2), and wherein a second cable (32b) leads from the distribution unit to the battery (14), and wherein a third cable (32c) leads from the battery (14) to the drive unit (30).

9. Bicycle (4) according to either of Claims 7 and 8, wherein the drive unit (30) has a drive motor and a motor control device, and wherein the motor control device is configured to control the drive motor (28).

## Revendications

1. Unité de distribution (2) pour un vélo électrique (4), l'unité de distribution (2) étant conçue pour être agencée dans un tube supérieur (6) du vélo (4), l'unité de distribution (2) comprenant un appareil de commande (10) et une interface d'alimentation (12), l'unité de distribution (2) pouvant être mise en liaison d'alimentation avec une batterie (14) du vélo (4) par l'intermédiaire de l'interface d'alimentation (12), l'unité de distribution (2) pouvant être mise en liaison d'alimentation avec un consommateur (16) par l'intermédiaire de l'interface d'alimentation (12), et l'appareil de commande (10) étant conçu pour commander l'alimentation en énergie électrique du consommateur (16) par la batterie (14) par l'intermédiaire de l'unité de distribution (2) conformément à un signal de commande, l'unité de distribution (2) comportant une interface de charge (20) d'un terminal mobile (22), et l'unité de distribution (2) étant conçue pour charger le terminal mobile (22) par l'intermédiaire de l'interface de charge (20) en énergie électrique provenant de la batterie (14), l'interface de charge (20) présentant un aimant permettant une liaison par complémentarité de force avec le terminal mobile (22).

2. Unité de distribution (2) selon la revendication 1, l'appareil de commande (10) étant conçu pour lire des données d'accélération détectées au moyen d'un capteur d'accélération (18), et l'appareil de commande (10) étant conçu pour commander un consommateur (16) en fonction des données d'accélération conformément à un signal de commande.

3. Unité de distribution (2) selon l'une quelconque des revendications précédentes, l'unité de distribution (2) présentant une interface de données (24) pour un terminal mobile (22), et l'unité de distribution (2) étant conçue pour recevoir des données par l'intermédiaire de l'interface de données (24) en provenance du terminal mobile (22), et l'appareil de commande (10) étant conçu pour lire les données reçues en provenance du terminal mobile (22) et pour commander un consommateur (16) en fonction des données lues conformément à un signal de commande.

4. Unité de distribution (2) selon l'une quelconque des revendications précédentes, l'unité de distribution (2) présentant une interface utilisateur (8), et l'interface utilisateur (8) étant conçue pour détecter une entrée utilisateur et l'appareil de commande (10) étant conçu pour lire l'entrée utilisateur détectée et pour commander un consommateur (16) en fonction de l'entrée utilisateur conformément à un signal de commande.

5. Unité de distribution (2) selon l'une quelconque des revendications précédentes, l'unité de distribution (2) présentant une interface de données (26) qui est conçue pour communiquer avec un autre composant (28) du vélo électrique (4), et l'appareil de commande (10) étant conçu pour lire des données provenant de l'autre composant (28) du vélo électrique (4) par l'intermédiaire de l'interface de données (26), et l'appareil de commande (10) étant conçu pour commander un consommateur (16) en fonction des données conformément à un signal de commande.

6. vélo (4) comprenant une unité de distribution (2) selon l'une quelconque des revendications 1 à 5.

7. vélo (4) selon la revendication 6, qui présente un cadre de vélo (7) comprenant un tube supérieur (6), une batterie (14), une unité d'entraînement (30) et un consommateur (16), l'unité de distribution (2) étant agencée dans le tube supérieur (6), la batterie (14) étant agencée dans le cadre de vélo (7), et le consommateur (16) étant indirectement relié à la batterie (14) par l'intermédiaire de l'unité de distribution (2) et l'unité d'entraînement (30) étant directement reliée à la batterie (14).

8. vélo (4) selon la revendication 7, dans lequel un premier câble (32a) va du consommateur (16) à l'unité de distribution (2), et dans lequel un deuxième câble (32b) va de l'unité de distribution à la batterie (14), et dans lequel un troisième câble (32c) va de la batterie (14) à l'unité d'entraînement (30).

9. vélo (4) selon l'une quelconque des revendications 7 ou 8, l'unité d'entraînement (30) comportant un moteur d'entraînement et un appareil de commande de moteur, et l'appareil de commande de moteur étant conçu pour commander le moteur d'entraînement (28).
